# EUROPEAN PATENT APPLICATION

(11) **EP 1 549 085 A2**
(43) Date of publication of application: **29.06.2005**
(21) Application number: 04101860.7
(22) Date of filing: 30.04.2004
(51) Int. Cl.: H04Q 3/66, H04M 7/00

(54) **Method and system for routing a telephone call using routing rules**

(30) Priority: 23.12.2003 US 746786; 30.04.2004 US 466690
(71) Applicant: AT&T Corp., New York, NY 10013-2412 (US)
(72) Inventor: Fisher, Stephen, Morristown, NJ 07921 (US)
(74) Representative: Suckling, Andrew Michael

(57) **Abstract**

A method and system for providing and using telephone call routing rules provides customer premises equipment adapted to intelligently and automatically identify a routing path associated with a telephone call and to route the telephone call to the identified routing path.

## Description

### CROSS REFERENCE TO RELATED APPLICATIONS

This application claims the benefit under 35 U.S.C. §119(e) of U.S. Provisional Application No. 60/466,690 filed April 30, 2003, which is incorporated herein by reference in its entirety.

### STATEMENT REGARDING FEDERALLY SPONSORED RESEARCH

Not Applicable

### FIELD OF THE INVENTION

This invention relates generally to telephony and, more particularly, to systems and methods for identifying a routing path associated with a telephone call.

### BACKGROUND OF THE INVENTION

Conventionally, a user having access to both a public switched telephone network (PSTN) and a voice over Internet protocol (VoIP) network manually selects a network within which to direct a telephone call. As the charges incurred from using either network are a function of a location of originating equipment, for example, a caller telephone, and a location of destination equipment, for example, a called telephone, the user does not always know which network will provide the lowest cost. Therefore, the user often makes the wrong routing decision, resulting in higher cost to the user than could otherwise be achieved.

It would, therefore, be desirable to overcome the aforesaid and other disadvantages.

### SUMMARY OF THE INVENTION

The present invention provides an automatic and intelligent routing of a telephone call to a selected one of the public switched telephone network (PSTN) and a voice over Internet Protocol (VoIP) network based upon predetermined routing rules. While the invention is shown and described in conjunction with the PSTN network and the VoIP network, it will be understood that the invention applies equally well to any combination of two or more networks, either telephone networks presently known, or telephone networks developed in the future.

In accordance with the present invention, a method of routing a telephone call includes generating routing rules having one or more telephone call categories, one or more respective telephone number characteristics, and one or more respective routing selections, and providing the routing rules to customer premises equipment (CPE) adapted to route the telephone call to a routing path according the routing rules. In one particular embodiment, the routing rules are provided to the CPE over an Internet connection.

In accordance with another aspect of the present invention, a method of connecting a telephone call includes identifying called telephone number characteristics associated with the telephone call, comparing the called telephone number characteristics with routing rules to provide a routing selection, and routing the telephone call to a selected one of a public switched telephone network (PSTN) and a voice over Internet protocol (VoIP) network according to the routing selection. In one particular arrangement, the identifying, the comparing, and the routing are provided by customer premises equipment (CPE).

In accordance with another aspect of the present invention, a system for routing a telephone call includes routing rules having one or more telephone call categories, one or more respective telephone number characteristics, and one or more respective routing selections, and customer premises equipment (CPE), wherein the CPE is adapted to route the telephone call to a routing path according to the routing rules.

In accordance with another aspect of the present invention, a system for routing a telephone call includes routing rules having one or more telephone call categories, one or more respective selected telephone number characteristics, and one or more respective routing selections. The system also includes a telephony interface adapted to receive a telephone call having a called telephone number, a dialing rules engine coupled to the telephony interface for analyzing the telephone call and selecting a routing path associated with the routing rules, a first gateway coupled to the routing processor and adapted to route the telephone call to the PSTN according to the selected routing path, and a second gateway coupled to the routing processor and adapted to route the telephone call to the VoIP network according to the selected routing path.

### BRIEF DESCRIPTION OF THE DRAWINGS

The foregoing features of the invention, as well as the invention itself may be more fully understood from the following detailed description of the drawings, in which:
FIG. 1 is a block diagram of a system for providing and using call routing rules to route telephone calls to a selected one of a public switched telephone network (PSTN) and a voice over Internet protocol (VoIP) network;
FIG. 2 is a block diagram of a portion of the system of FIG. 1;
FIG. 3 is a flow chart showing a method for providing and using the call routing rules in accordance with the system of FIG. 1; and
FIG. 4 is a flow chart showing a portion of the method of FIG. 3.

### DETAILED DESCRIPTION OF THE INVENTION

Before describing the method and system of the present invention, some introductory concepts and terminology are explained. As used herein, the term "network" is used to describe any computer or telephone interconnection that carries voice (audio), video, or data. Networks include but are not limited to a public switched telephone network (PSTN), a private branch exchange (PBX) telephone network, the Internet including the world wide web (www), and a local area network (LAN), for example a LAN having an Ethernet structure.

It is well known that the public switched telephone network (PSTN) can provide connection services to connect two or more telephones in a telephone call. A telephone call includes a signaling portion and a real-time portion. The signaling portion is used to connect the telephone call, for example, to ring a telephone, and the real-time portion is used to convey a communication, for example, a voice communication. The real-time portion is typically referred to as media. The media in a voice communication includes only voice signals.

It will, however, be recognized that the PSTN is not the only type of network that can carry telephone calls. For example, voice over Internet protocol (VoIP) is a protocol that allows voice communications to be carried on a network capable of Internet protocol (IP) communications, for example, the Internet. Signals within VoIP can have signaling and real-time portions having functions similar to those described above. For example, VoIP includes signals capable of ringing an Internet telephone or otherwise alerting an Internet-connected personal computer (PC), and also signals adapted to indicate that the Internet telephone or the PC has been answered. VoIP can also include real-time voice signals.

As used herein, a "telephone call" refers to a communication having the signaling portion and the real-time portion, which is carried on any type of network, for example the PSTN network. As used herein, a "telephone call network" refers to any network capable of transporting a signaling portion and a real-time portion associated with a telephone call, wherein the real-time portion includes a voice communication, and wherein the telephone call networks include but are not limited to, the PSTN, the Internet, and an intranet.

As used herein, "routing" refers to a selection of one network from among two or more networks within which to direct a telephone call. Routing provides selection of a "routing path," or a "route" which, as used herein, refers to the one selected network. Therefore, it will be understood that, as used herein, the routing path does not necessarily correspond to an entire connection path between a source of a telephone call and a destination of a telephone call.

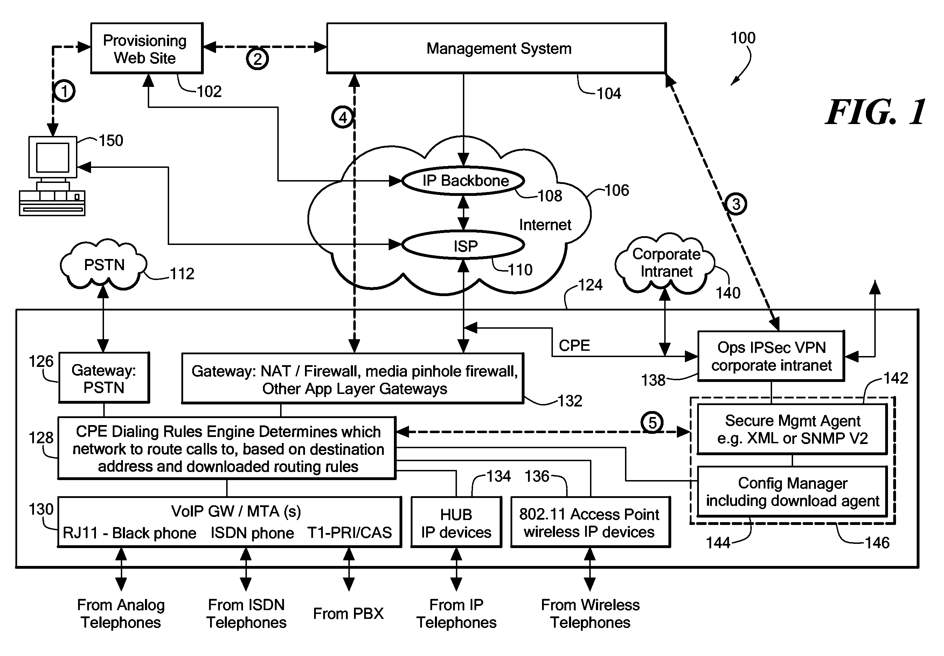

Referring now to FIG. 1, an exemplary system 100 for providing and using call routing rules in accordance with the present invention allows call routing rules to be downloaded to and used by a customer premises equipment (CPE) 124 in order to intelligently and automatically route telephone calls to one or the other of the PSTN 112 and a VoIP network, for example, the Internet 106.

The exemplary system 100 includes a provisioning web site 102 and a management system 104 coupled to an Internet protocol (IP) backbone 108 within the Internet 106. The IP backbone 108 is coupled to the CPE 124 via an Internet service provider (ISP) 110. The CPE can also be coupled to the PSTN 112 and to an intranet, for example a corporate intranet 140.

The CPE 124 includes a CPE dialing rules engine 128 which can be coupled to the Internet 106 and to the corporate internet 140 via a first gateway 132 adapted to provide VoIP communications, network address translation (NAT), and firewall provisions. The CPE 124 can include security provisions 138 associated with the coupling to the Internet 106 and the corporate intranet 140, for example Internet protocol security IPSec and virtual private network (VPN). Associated with the security provisions 138, the CPE 124 can include a secure management agent 142 and a configuration manger 146 having a download agent. The secure management agent 142 can interact with the security provisions 138, providing different security provisions as desired. The configuration manager 144 can provision and/or store configuration information associated with the CPE 124, for example a CPE identifier code that can be used by the management system 104 in order to identify the CPE 124, and for another example, routing rules as in Table 1 described more fully below. The CPE 124 can also be coupled through a second gateway 126 to the PSTN 112.

The CPE 124 can also include an interface 130 for receiving signals from analog telephones (black phones), from ISDN telephones, and from a private branch exchange (PBX). The CPE 124 can also include an interface 134 for receiving signals from IP telephones, and an interface 136 for receiving signals from wireless telephones. While the interface 136 is shown to include provisions for IEEE 802.11 format, in other embodiments, provisions for another wireless format can be provided.

Operation of the system 100 can be described using communication pathways 1-5 shown in FIG. 1 as dashed lines. It will be understood that the communication pathways 1-5 as shown represent communications between elements of FIG. 1 and do not necessarily represent couplings over which the communications occur.

Along the communication pathway 1, which can be provided through the Internet 106, the provisioning web site 102 can be accessed, for example with a personal computer (PC) 150. The provisioning web site 102 can provide to the PC 150, for example, a registration web page to a user (not shown), with which the user can register the CPE 124 for services. The provisioning web site can also, for example, provide a login screen to the user.

Once registered, the provisioning web site 102 provides, along the communication pathway 2, which can be provided through the Internet 106, information indicating to the management system 104 that the CPE 124 is registered, and the management system can provide services to the CPE 124.

Along the pathway 3, which can be provided through the Internet 106, the management system 104 can arrange secure communications between the management system 104 and the CPE 124, establishing for example, IPSec communications or and/or VPN communications.

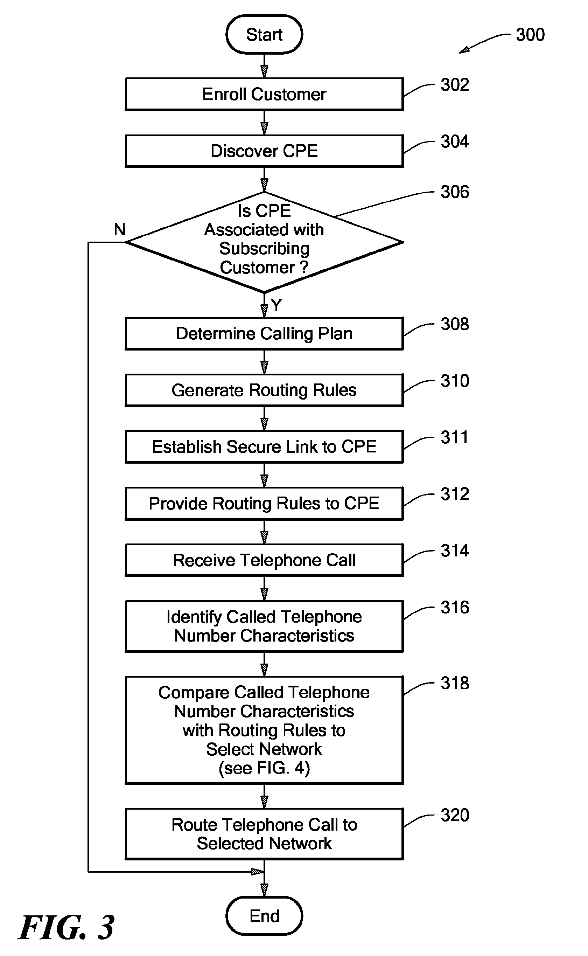

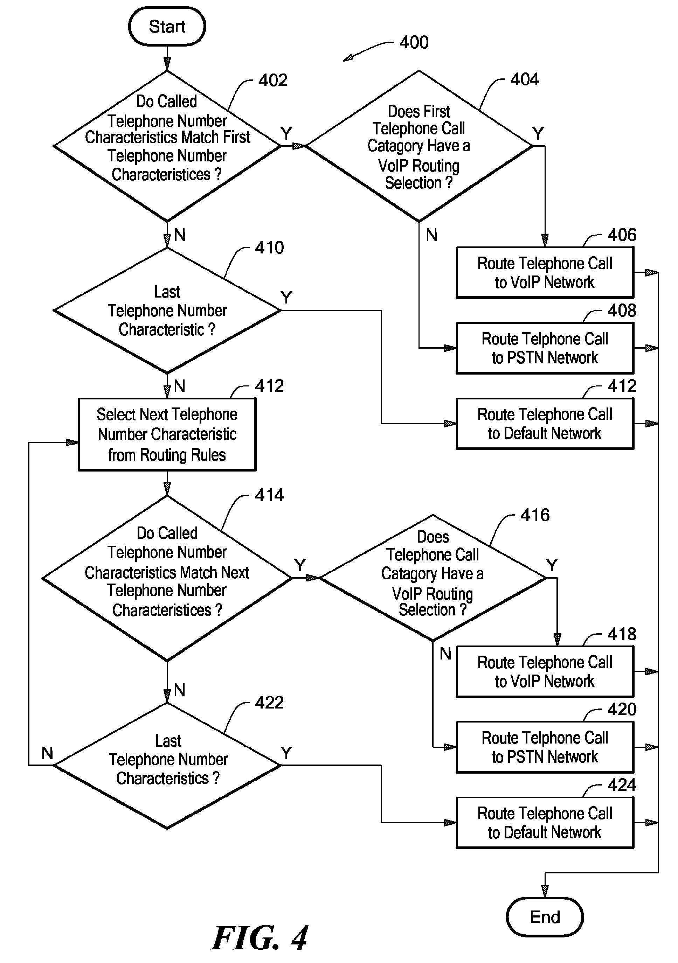

Along the pathway 4, , which can be provided through the Internet 106, the management system can provide the services to the CPE 124, for example the routing rules as in Table 1. The services are further described in conjunction with FIGS. 3 and 4. However, let it suffice here to say that the management system can provide a routing table (e.g., Table 1 below) having routing rules and associated routing paths downloaded to the CPE 124 and used (via pathway 5, which can be provided within the CPE 124) by the CPE dialing rules engine 128. The routing rules and associated routing paths can be used by the CPE 124 to identify telephone number characteristics of telephone calls received with the interfaces 130, 134, 136. The CPE can route a telephone call according to the routing rules, to a selected one of the PSTN 112 and the Internet 106, for example, as a VoIP telephone call.

Exemplary routing rules are shown in Table 1. As shown, the routing rules can include a mapping of telephone number characteristics with routing selections. The telephone number characteristics, here merely designated as A-Z for convenience, can include, but are not limited to, selected area codes (for example, 1617 as the first four digits), selected exchanges (for example 871 as the fifth through the seventh digits when preceded by 1 as the first digit), selected complete number sequences (for example 911 as the entire telephone number), and selected country codes (for example 011 as the first three digits). For example, in Table 1, a telephone number characteristic "A" can correspond to 1617 as the first four digits. The routing selections shown in Table 1 include, but are not limited to, the PSTN 112 and the Internet 106 as VoIP.

The routing rules can also include a listing of telephone call categories. As shown in Table 1, the telephone call categories include, but are not limited to, a local PSTN destination category, a local toll PSTN destination category, a long distance PSTN destination category, an international PSTN destination category, a local VoIP destination category, a local toll VoIP destination category, a long distance VoIP destination category, an international VoIP destination category, an intra-site destination category, a local intra-company PSTN destination category, a local toll intra-company PSTN destination category, a long distance intra-company PSTN destination category, an international intra-company PSTN destination category, a local intra-company VoIP destination category, a local toll intra-company VoIP destination category, a long distance intra-company VoIP destination category, an international intra-company VoIP destination category, a local partner PSTN destination category, a local toll partner PSTN destination category, a long distance partner PSTN destination category, a long distance partner PSTN destination category, and international partner PSTN destination category, a local partner VoIP destination category, a local toll partner VoIP destination category, a long distance partner VoIP destination category, and an international partner VoIP destination category. Each of the above telephone call categories is well known to one of ordinary skill in the art. As indicated in Table 1, the routing selections and corresponding telephone number characteristics can be associated with respective telephone call categories.

**Table 1**

| Telephone Number Characteristics | Telephone Call Categories | Routing Selections |
|---|---|---|
| A | local PSTN destination | PSTN |
| B | local toll PSTN destination | PSTN |
| C | long distance PSTN destination | PSTN |
| D | international PSTN destination | PSTN |
| E | local VoIP destination | VoIP |
| F | local toll VoIP destination | VoIP |
| G | long distance VoIP destination | VoIP |
| H | international VoIP destination | VoIP |
| I | intra-site destination | VoIP |
| J | local intra-company PSTN destination | PSTN |
| K | local toll intra-company PSTN destination | PSTN |
| L | long distance intra-company PSTN destination | PSTN |
| M | international intra-company PSTN destination | PSTN |
| N | local intra-company VoIP destination | VoIP |
| O | local toll intra-company VoIP destination | VoIP |
| P | long distance intra-company VoIP destination | VoIP |
| Q | international intra-company VoIP destination | VoIP |
| R | local partner PSTN destination | PSTN |
| S | local toll partner PSTN destination | PSTN |
| T | long distance partner PSTN destination , | PSTN |
| U | long distance partner PSTN destination | PSTN |
| V | international partner PSTN destination | PSTN |
| W | local partner VoIP destination | VoIP |
| X | local toll partner VoIP destination | VoIP |
| Y | long distance partner VoIP destination | VoIP |
| Z | international partner VoIP destination | VoIP |

In one particular embodiment, the routing rules, for example the routing rules of Table 1, can provide different routing selections at different times of day. For example, late at night long distance calls can be routed to the PSTN, and during the day the long distance calls can be routed to the VoIP network.

In one particular embodiment, the routing rules, can be selected to reduce calling cost to the user. In another embodiment, the routing rules can be selected to provide the most reliable telephone calls to the user. The most reliable telephone call can be determined, for example, in accordance with one or more of a network availability and a network bandwidth. In another embodiment, the routing rules can be selected to reduce calling cost to a service provider, for example a VoIP service provider.

The routing rules (e.g., Table 1) provided from the management system 104 to the CPE 124 can be different for different CPEs at different locations. As is known, telephone calling plans associated with the PSTN vary greatly from place to place. Therefore, at a first location it may be desirable to route a telephone call having a particular telephone number to the PSTN if the PSTN route is inexpensive when compared with the VoIP route as originated from the first location. However, at a second location, it may be desirable to route a telephone call having the same telephone number to the Internet as a VoIP call if the PSTN route is expensive when compared with the VoIP route as originated from the second location.

As is also known, at a particular location, a customer can often select one of a variety of calling plans, each usually having a different cost structure. For example, the customer can elect to have a calling plan with free long distance calls.

As is also known, a particular calling plan associated with a PSTN customer can change from time to time. For example, a PSTN telephone provider can change the price per minute for local calls. Therefore, the management system 124 is adapted to download updated routing rules to the CPE 124 accordingly.

It should be appreciated that the CPE 124 can be provided in a variety of forms. For example, the CPE 124 can be a computer having telephony interfaces, and some of the elements within the CPE 124 can be software elements having associated software code. For another example, the CPE 124 can be an instrument in which one or more of the elements within the CPE 124 are implemented as firmware associated with one or more embedded processors. For yet another example, the CPE 124 can be an instrument in which one or more of the elements within the CPE 124 are implemented as hardware elements, for example, as field programmable gate arrays, masked gate arrays, or custom masked circuits.

While the PC 150 is shown for registering the CPE 124 with the provisioning web site 102, in other embodiment, the CPE 124 is able to directly register itself. For example, the CPE 124 can include a graphical user interface (GUI) for allowing a user to register the CPE 124 with the provisioning web site 102. Also, in other embodiments, the provisioning web site 102 and the management system 104 are combined into a single registration and management system.

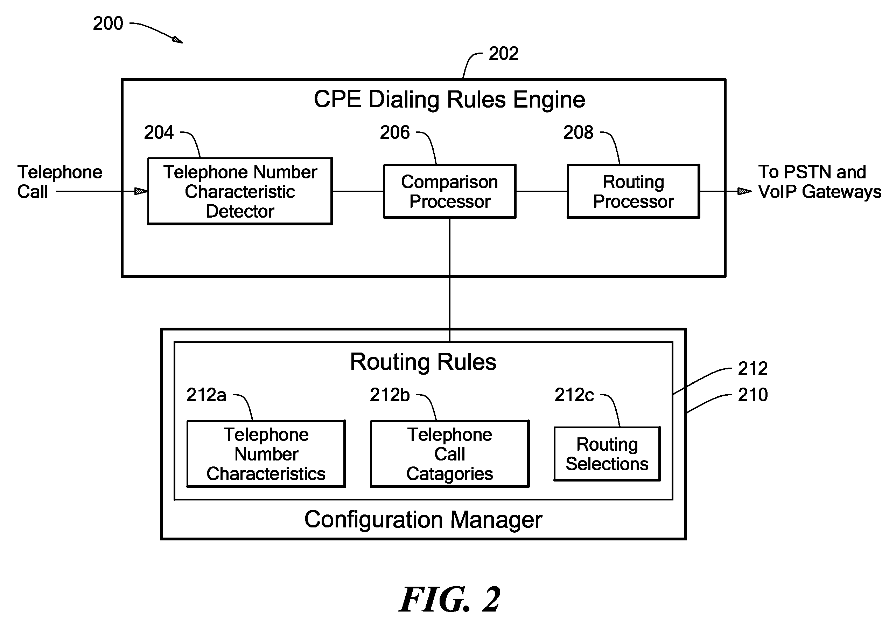

Referring now to FIG. 2, a CPE dialing rules engine 202 is coupled to a configuration manager 210. The CPE dialing rules engine 202 can be the same as or similar to the CPE dialing rules engine 128 of FIG. 1 and the configuration manager 210 can be same as or similar to the configuration manager 144 of FIG. 1.

The CPE dialing rules engine 202 includes a telephone number characteristic detector 204 adapted to receive a telephone call having a called telephone number and to identify digits in the called telephone number. The CPE dialing rules engine 202 also includes a comparison processor 206 adapted to compare the called telephone number digits with routing rules 212, and a routing processor 208 adapted to route the telephone call to a selected one of the PSTN gateway 126 (FIG. 1) and the VoIP gateway 132 (FIG. 1) according to the routing rules 212.

The configuration manger 210 includes the routing rules 212, having telephone number characteristics 212a, telephone call categories 212b, and routing selections 212c. Exemplary telephone number characteristics, telephone calls categories, and routing selections are shown in Table 1.

In operation, the CPE dialing rules engine 202 receives a telephone call having a called telephone number from an interface, for example with one of the interfaces 130, 134, 136 of FIG. 1. The telephone number characteristic detector 204 identifies digits within the called telephone number and the comparison processor 206 compares the digits within the telephone number characteristics 212a to identify a match. If a match is found, a respective one of the routing selections 212c directs the routing processor 208 to route the telephone call to a selected one of the PSTN gateway 126 and the VoIP gateway 132 for transmission to the PSTN or the Internet accordingly.

Referring now to FIG. 3, a process associated with the system 100 of FIG. 1 begins at step 302, where a CPE, for example the CPE 124 of FIG. 1, is enrolled to receive services, for example, with the PC 150 and the provisioning web site 102 of FIG. 1. Once the CPE 124 is enrolled, the process continues to step 304, where the CPE 124 is discovered, i.e., the CPE 124 is electronically recognized by the management system 104 (FIG. 1). At step 306, the management system 104 determines if the CPE 124 is subscribed. If the CPE 124 is subscribed, the process continues to step 308.

At step 308, the management system 104 identifies a telephone calling plan associated with the customer. As described above, the calling plan can be different from place to place and from time to time and the customer also can often select from among a variety of calling plans.

At step 310, the management system 104 generates routing rules, for example routing rules as shown in Table 1, and upon establishing a secure link to the CPE 124 in step 311, for example with the security provisions 138 (FIG. 1), the management system 104 downloads the routing rules to the CPE 124, which are provided at step 312 to the configuration manager 144 (FIG. 1).

At step 314 a telephone call is received by the CPE 124 from the one of the analog telephones, one of the ISDN telephones, the PBX, one of the IP telephones, or one of the wireless telephones, all shown in FIG. 1.

At step 316, the called telephone number of the telephone call is analyzed by the telephone number characteristic detector 204 (FIG. 2) to identify telephone number characteristics, which are then compared at step 318 by the comparison processor 206 (FIG. 2) with telephone number characteristics 212a (FIG. 2) provided in the routing rules 212 (FIG. 2). If a match is found, the telephone call is routed at step 320 according to the routing rules 212, to a network mapped to the matched telephone number characteristic in the routing rules 212, which can be a selected one of the PSTN and the Internet. As described above, the routing at step 320 provides a selection of a network, but does not necessarily form of an entire routing path, generating a connection between a source and a destination of the telephone call. However, in other embodiments, the routing at step 320 provides the entire routing path, generating a connection between a source and a destination of the telephone call.

Referring now to FIG. 4, a matching process 400 associated with step 320 of FIG. 3, begins at step 402 where the called telephone number is compared with a first telephone number characteristic in the routing rules, for example with the characteristic A of Table 1. If a match is determined, the process continues to step 404, where it is determined whether the matched telephone number characteristic maps to a VoIP routing selection. If the matched telephone number characteristic maps to a VoIP routing selection, at step 406, the telephone call is routed to the VoIP network, i.e., to the Internet.

At step 404, if the matched telephone number characteristic does not map to the VoIP routing selection then the process continues to step 408 where the telephone call is routed to the PSTN network.

At step 402, if the called telephone number does not match with a first telephone number characteristic in the routing rules, then the process continues to step 410, where a decision is made as to whether the first telephone number characteristic in the routing rules is the only or the last telephone number characteristic in the routing rules. If so, the process continues to step 412, where the telephone call is routed to a default network, which can be pre-selected to be either one of the PSTN or the VoIP network.

At step 410, if the first telephone number characteristic in the routing rules is not the only or the last telephone number characteristic in the routing rules, then the process continues to step 412, where the next telephone number characteristic in the routing rules is selected, for example, the characteristic B of Table 1. At step 414, the called telephone number is compared with a next telephone number characteristic in the routing rules. If a match is determined, the process continues to step 416, where it is determined whether the matched telephone number characteristic maps to a VoIP routing selection. If the matched telephone number characteristic maps to a VoIP routing selection, at step 418, the telephone call is routed to the VoIP network, i.e., to the Internet.

If at step 416, the matched telephone number characteristic does not map to the VoIP routing selection then the process continues to step 420 where the telephone call is routed to the PSTN network.

At step 414, if the called telephone number does not match with the selected next telephone number characteristic in the routing rules, then the process continues to step 422, where a decision is made as to whether the selected telephone number characteristic in the routing rules is the last telephone number characteristic in the routing rules.

If at step 422, the selected telephone number characteristic in the routing rules is not the last telephone number characteristic in the routing rules, then the process continues to step 412, and the process loops among steps 412, 414, and 422 until either a matching telephone number characteristic is identified at step 414, or the last telephone number characteristic is found at step 422.

If at step 422, the selected telephone number characteristic in the routing rules is the last telephone number characteristic in the routing rules, then the process continues to step 424, and the telephone call is routed to the default network.

While the process of FIG. 4 describes one linear method of searching through the routing rules to find a matching telephone number characteristic, it will be understood that there are other methods of searching a table. For example, a hierarchical search can be used using progressive digits of the called telephone number.

The present invention provides a user with the ability to have a telephone call automatically routed to either one of the PSTN and the VoIP network in response to routing rules provided by the management system 104 (FIG. 1). In one particular embodiment, local calls are always directed to the PSTN, while long distance calls, including international calls, are directed to the VoIP network. In another embodiment, telephone calls that do not result in revenue to a VoIP provider, for example 911 telephone calls, can be routed to the PSTN, and telephone calls that result in such revenue can be routed to the VIP network.

The invention enables a service provider, for example, a VoIP service provider, associated with the management system 104 (FIG. 1) to provision the CPE 124 (FIG. 1) at the customer's premises to provide intelligent call routing between the PSTN and the VoIP network. The CPE 124 can not only be configured for a customer's particular calling plans, but can also route calls which do not generate revenue for the VoIP service provider (such as local and E911 calls) over the PSTN network.

The CPE 124 (FIG. 1) intelligently routes calls to the PSTN and the VoIP networks and the routing rules 212 (FIG. 2) may be provisioned and updated from a network, for example the Internet 106 (FIG. 1) from the management system 104 (FIG. 1). This arrangement provides customers with an intelligent call routing.

Having described preferred embodiments of the invention it will now become apparent to those of ordinary skill in the art that other embodiments incorporating these concepts may be used. Additionally, the software included as part of the invention may be embodied in a computer program product that includes a computer useable medium. For example, such a computer usable medium can include a readable memory device, such as a hard drive device, a CD-ROM, a DVD-ROM, or a computer diskette, having computer readable program code segments stored thereon. The computer readable medium can also include a communications link, either optical, wired, or wireless, having program code segments carried thereon as digital or analog signals. Accordingly, it is submitted that that the invention should not be limited to the described embodiments but rather should be limited only by the spirit and scope of the appended claims. All publications and references cited herein are expressly incorporated herein by reference in their entirety.

## Claims

1. A method of routing a telephone call, comprising:
generating routing rules having one or more telephone call categories, one or more respective telephone number characteristics, and one or more respective routing selections; and
providing the routing rules to customer premises equipment (CPE) adapted to route the telephone call to a routing path according the routing rules.

2. The method of claim 1, wherein selected ones of the routing rules are selected in order to reduce a cost associated with the telephone call.

3. The method of Claim 1, wherein the one or more respective telephone number characteristics include selected numbers associated with selected digits of a telephone number.

4. The method of Claim 1, wherein the one or more respective telephone number characteristics include selected area code numbers.

5. The method of Claim 1, wherein the one or more telephone call categories include one or more of a local PSTN destination category, a local toll PSTN destination category, a long distance PSTN destination category, an international PSTN destination category, a local VoIP destination category, a local toll VoIP destination category, a long distance VoIP destination category, an international VoIP destination category, an intra-site destination category, a local intra-company PSTN destination category, a local toll intra-company PSTN destination category, a long distance intra-company PSTN destination category, an international intra-company PSTN destination category, a local intra-company VoIP destination category, a local toll intra-company VoIP destination category, a long distance intra-company VoIP destination category, an international intra-company VoIP destination category, a local partner PSTN destination category, a local toll partner PSTN destination category, a long distance partner PSTN destination category, a long distance partner PSTN destination category, and international partner PSTN destination category, a local partner VoIP destination category, a local toll partner VoIP destination category, a long distance partner VoIP destination category, and an international partner VoIP destination category.

6. The method of Claim 1, wherein the providing the routing rules to the CPE includes:
identifying if a customer associated with the CPE is a subscribing customer; and
providing the routing rules to the CPE only if the customer is a subscribing customer.

7. The method of Claim 1, wherein the providing the routing rules to the CPE includes generating a secure network connection to the CPE.

8. The method of Claim 1, wherein the providing the routing rules to the CPE is provided over a network connection.

9. The method of Claim 8, wherein the network connection is an Internet connection.

10. The method of Claim 1, further including:
determining when a calling plan associated with the CPE has changed to an updated calling plan; and
selecting updated routing rules associated with the updated calling plan; and
providing the updated routing rules to the CPE.

11. The method of Claim 10, wherein the providing the updated routing rules to the CPE includes:
identifying if a customer associated with the CPE is a subscribing customer; and
providing the updated routing rules to the CPE only if the customer is a subscribing customer.

12. The method of Claim 11, wherein the providing the updated routing rules to the CPE includes generating a secure network connection to the CPE.

13. The method of Claim 11, wherein the providing the updated routing rules to the CPE is provided over a network connection.

14. The method of Claim 13, wherein the network connection is an Internet connection.

15. A method of routing a telephone call, comprising:
identifying called telephone number characteristics associated with the telephone call;
comparing the called telephone number characteristics with routing rules to provide a routing selection; and
routing the telephone call to a selected one of a public switched telephone network (PSTN) and a voice over Internet protocol (VoIP) network in response to the routing selection, wherein the identifying, the comparing, and the routing are provided by customer premises equipment (CPE).

16. The method of Claim 15, wherein selected ones of the routing rules are selected in order to reduce a cost associated with the telephone call.

17. The method of Claim 15, wherein the called telephone number characteristics include selected numbers associated with selected digits of the called telephone number.

18. The method of Claim 15, wherein the called telephone number characteristics include selected area codes.

19. The method of Claim 15, wherein the routing the telephone call includes:
coupling telephone calls having selected called telephone number characteristics to the PSTN; and
coupling telephone calls having other selected called telephone number characteristics to the VoIP network.

20. The method of Claim 15, further including:
detecting a connection performance of at least one of the PSTN and the VoIP network; and
changing the routing the telephone call to the selected one of the PSTN and the VoIP network in response to the connection performance.

21. The method of Claim 20, wherein the connection performance includes one or more of a network availability and a network bandwidth.

22. A system for routing a telephone call, comprising:
routing rules having one or more telephone call categories, one or more respective telephone number characteristics, and one or more respective routing selections; and
a network interface adapted to provide the routing rules to customer premises equipment (CPE), to enable the CPE to route the telephone call to a routing path according to the routing rules.

23. The system of Claim 22, wherein selected ones of the routing rules are selected in order to reduce a cost associated with the telephone call.

24. The system of Claim 22, wherein the one or more respective telephone number characteristics include selected numbers associated with selected digits of a telephone number.

25. The system of Claim 22, wherein the one or more respective telephone number characteristics include selected area code numbers.

26. The system of Claim 22, wherein the one or more telephone call categories include one or more of a local PSTN destination category, a local toll PSTN destination category, a long distance PSTN destination category, an international PSTN destination category, a local VoIP destination category, a local toll VoIP destination category, a long distance VoIP destination category, an international VoIP destination category, an intra-site destination category, a local intra-company PSTN destination category, a local toll intra-company PSTN destination category, a long distance intra-company PSTN destination category, an international intra-company PSTN destination category, a local intra-company VoIP destination category, a local toll intra-company VoIP destination category, a long distance intra-company VoIP destination category, an international intra-company VoIP destination category, a local partner PSTN destination category, a local toll partner PSTN destination category, a long distance partner PSTN destination category, a long distance partner PSTN destination category, and international partner PSTN destination category, a local partner VoIP destination category, a local toll partner VoIP destination category, a long distance partner VoIP destination category, and an international partner VoIP destination category.

27. The system of Claim 22, further including a management system adapted to detect if a customer associated with the CPE is a subscribing customer, further adapted to provide a network connection to the CPE, and still further adapted to provide the routing rules to the CPE.

28. The system of Claim 27, wherein the network connection includes a secure Internet connection.

29. A system for routing a telephone call, comprising:
routing rules having one or more telephone call categories, one or more respective selected telephone number characteristics, and one or more respective routing selections;
a telephony interface adapted to receive a telephone call having a called telephone number;
a dialing rules engine coupled to the telephony interface for analyzing the telephone call and selecting a routing path associated with the routing rules;
a first gateway coupled to the routing processor and adapted to route the telephone call to the PSTN in response to the selected routing path; and
a second gateway coupled to the routing processor and adapted to route the telephone call to the VoIP network in response to the selected routing path.

30. The system of Claim 29, wherein selected ones of the routing rules are selected in order to reduce a cost associated with the telephone call.

31. The system of Claim 29, wherein the dialing rules engine includes:
a called telephone number characteristic detector coupled to the telephony interface, for providing called telephone number characteristics;
a comparison processor coupled to the called telephone number characteristic detector and adapted to compare the called telephone number characteristics with the routing rules to provide a routing selection output; and
a routing processor coupled to the comparison processor and adapted to choose a selected routing path associated with the telephone call from a selected one of a public switched telephone network (PSTN) and a voice over internet protocol (VoIP) network in response to the routing selection output.

32. The method of Claim 29, wherein the called telephone number characteristics include selected numbers associated with selected digits of the called telephone number.

33. The method of Claim 29, wherein the called telephone number characteristics include selected area code numbers.

34. A computer program medium having computer readable code thereon, comprising:
instructions for identifying called telephone number characteristics associated with a telephone call;
instructions for comparing the called telephone number characteristics with routing rules having one or more telephone call categories to provide a routing selection;
instruction for routing the telephone call to a selected one of a public switched telephone network (PSTN) and a voice over Internet protocol (VoIP) network in response to the routing selection, wherein the instructions for identifying, comparing, and routing are provided by customer premises equipment (CPE).

35. The computer program medium of Claim 34, wherein selected ones of the routing rules are selected in order to reduce a cost associated with the telephone call.

36. The computer program medium of Claim 34, wherein the one or more telephone call categories include one or more of a local PSTN destination category, a local toll PSTN destination category, a long distance PSTN destination category, an international PSTN destination category, a local VoIP destination category, a local toll VoIP destination category, a long distance VoIP destination category, an international VoIP destination category, an intra-site destination category, a local intra-company PSTN destination category, a local toll intra-company PSTN destination category, a long distance intra-company PSTN destination category, an international intra-company PSTN destination category, a local intra-company VoIP destination category, a local toll intra-company VoIP destination category, a long distance intra-company VoIP destination category, an international intra-company VoIP destination category, a local partner PSTN destination category, a local toll partner PSTN destination category, a long distance partner PSTN destination category, a long distance partner PSTN destination category, and international partner PSTN destination category, a local partner VoIP destination category, a local toll partner VoIP destination category, a long distance partner VoIP destination category, and an international partner VoIP destination category.

37. The computer program medium of Claim 34, wherein the called telephone number characteristics include numbers associated with selected digits of a called telephone number.
